(19) Europäisches Patentamt
European Patent Office
Office européen des brevets

(11) **EP 4 141 863 A1**

(12) **EUROPEAN PATENT APPLICATION**

(43) Date of publication:
**01.03.2023 Bulletin 2023/09**

(21) Application number: **22191297.5**

(22) Date of filing: **19.08.2022**

(51) International Patent Classification (IPC):
*G10K 11/00* (2006.01)    *G01S 7/521* (2006.01)
*G01V 1/20* (2006.01)

(52) Cooperative Patent Classification (CPC):
**G10K 11/008; G01S 7/521;** G01V 1/201

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.08.2021 GB 202112159**

(71) Applicant: **Thales Holdings UK Plc**
**Reading, Berkshire RG2 6GF (GB)**

(72) Inventor: **SQUIRE, Jeremy**
**Somerset, BA8 0DH (GB)**

(74) Representative: **Marks & Clerk LLP**
**15 Fetter Lane**
**London EC4A 1BW (GB)**

(54) **A MODULE FOR A TOWABLE SONAR APPARATUS**

(57)    A module (11) for a towable sonar apparatus, comprising:
a core component (20), comprising at least one sensor (24) and a first connection part (28);
a casing (22), comprising:
a tubular member (30) provided around the core component (20);
a second connection (32) part detachably connected to the first connection part (28) of the core component (20).

FIG. 2(a)

EP 4 141 863 A1

**Description**

CROSS-REFERENCE TO RELATED APPLICATIONS

This application is based upon and claims the benefit of priority from prior United Kingdom Application number 2112159.5 filed on August 25, 2021 the entire contents of which are incorporated herein by reference.

FIELD

The present disclosure relates to a casing for a towable sonar apparatus, a core component for a towable sonar apparatus, and a module for a towable sonar apparatus, as well as methods for manufacturing the same.

BACKGROUND

A sonar array uses sound propagation in water for purposes such as navigation, detection of objects, mapping or communication for example. A sonar array comprises one or more acoustic sensors that generate an electrical signal in response to a detected acoustic signal. In an active sonar system, the sonar apparatus also acts as the source of an acoustic wave. For example, the sensor components may be configured to both generate and receive acoustic signals. Acoustic transducers are an example of a component that can both generate and receive acoustic signals. In a passive sonar system, the sensors only receive acoustic signals.

A sonar system may be configured as a towed array sonar apparatus, in which one or more sensors are towed behind a vessel on a cable. Towed arrays are available in different sizes, where different size arrays may be particularly suited for different applications. This can result in multiple towed sonar systems being used and maintained, resulting in different assembly methods, different maintenance schedules or different component requirements for example.

BRIEF DESCRIPTION OF DRAWINGS

Embodiments of the invention will now be described by way of example only, with reference to the accompanying drawings in which:

Figure 1 shows a schematic illustration of a towable sonar apparatus in accordance with an embodiment, being towed by a vessel;

Figure 2(a) is a schematic illustration of a cross-section along the length of a module for a towable sonar apparatus in accordance with an embodiment;

Figure 2(b) is a schematic illustration of a cross-section through the module for a towable sonar apparatus in accordance with an embodiment;

Figure 3 is a schematic illustration of a core component for a towable sonar apparatus in accordance with an embodiment;

Figure 4(a) shows a schematic illustration of a core component for a towable sonar apparatus in accordance with an embodiment;

Figure 4(b) is a schematic illustration of a module for a towable sonar apparatus in accordance with an embodiment;

Figure 4(c) is a schematic illustration of cross-section of a module for a towable sonar apparatus in accordance with an embodiment;

Figure 5 shows a method of manufacturing a casing for a towable sonar array in accordance with an embodiment;

Figure 6 shows a method of manufacturing a core component for a towable sonar array according to an embodiment;

Figure 7 shows a method of manufacturing a module for a towable sonar apparatus in accordance with an embodiment.

DETAILED DESCRIPTION

According to a first aspect, there is provided a module for a towable sonar apparatus, comprising:

a core component, comprising at least one sensor and a first connection part;
a casing, comprising:

a tubular member provided around the core component;
a second connection part detachably connected to the first connection part of the core component.

In an embodiment, the tubular member has an outer diameter at least 1.5 times the outer diameter of the core component. In an embodiment, the tubular member has an outer diameter at least 2 times the outer diameter of the core component.

In an embodiment, the tubular member is a second tubular member and wherein the core component further comprises a first tubular member, wherein the at least one sensor is located within the first tubular member.

In an embodiment, the core component further comprises a first end cap being at a first end of the first tubular member and comprising the first connection part, and wherein the casing further comprises a second end cap at a first end of the second tubular member, the second connection part being an internal connection part of the second end cap, the second end cap further comprising an external connection part connectable to another module.

In an embodiment, the core component further comprises:

a third end cap at a second end of the first tubular member; and
a longitudinal strength member connected between the first end cap and the third end cap.

According to a second aspect, there is provided casing for a towable sonar apparatus, comprising:

a tubular member;
an end cap at a first end of the tubular member, wherein the end cap comprises an external connection part connectable to another casing and an internal connection part connectable to a core component.

In an embodiment, the tubular member has a wall thickness of less than 10mm.

In an embodiment, the internal connection part provides an electrical and mechanical connection to the core component.

In an embodiment, the external connection part provides an electrical and mechanical connection to another casing.

According to a third aspect, there is provided a core component for a towable sonar apparatus, comprising:

at least one sensor;
a core member, wherein the at least one sensor is located inside the core member; and
an end cap at a first end of the core member, wherein the end cap comprises a first connection part connectable to a casing.

In an embodiment, the end cap is further configured to connect to another core component.

According to a fourth aspect, there is provided a towable sonar apparatus, comprising any of the above modules.

According to a fifth aspect, there is provided a vessel comprising the towable sonar apparatus.

According to a sixth aspect, there is provided a kit-of-parts comprising:

a core component for a towable sonar apparatus, comprising:

at least one sensor; and
a first connection part; and

a casing for a towable sonar apparatus, comprising:

a tubular member configured to be provided around the core component; and

a second connection part detachably connectable to the first connection part of the core component.

According to a seventh aspect, there is provided a kit-of-parts comprising:

a tubular member;
an end cap connectable to a first end of the tubular member, wherein the end cap comprises an external connection part connectable to another casing and an internal connection part connectable to a core component.

According to an eighth aspect, there is provided a computer program comprising computer executable instructions that, when executed by a processor, cause the processor to control an additive manufacturing apparatus to manufacture the module, the casing, the core component or the kit of parts.

According to a ninth aspect, there is provided a method of manufacturing a device via additive manufacturing, the method comprising:

obtaining an electronic file representing a geometry of a product wherein the product is the module, the casing, the core component or the kit of parts; and
controlling an additive manufacturing apparatus to manufacture, over one or more additive manufacturing steps, the product according to the geometry specified in the electronic file.

According to a tenth aspect, there is provided a method of manufacturing a module for a towable sonar array, the method comprising:

forming a core component comprising at least one sensor and a first connection part;
forming a casing comprising a tubular member and a second connection part detachably connectable to the first connection part of the core component; and
inserting the core component into the casing such that the tubular member is provided around the core component and such that the second connection part of the casing is detachably connected to the first connection part of the core component.

According to an eleventh aspect, there is provided a method of manufacturing a casing for a towable sonar array, the method comprising:

forming a tubular member;
forming an end cap connectable to a first end of the tubular member, wherein the end cap comprises an external connection part connectable to another casing and an internal connection part connectable to a core component.

According to a twelfth aspect, there is provided a method of manufacturing a core component for a towable sonar array, the method comprising:

forming a core member, wherein at least one sensor is located inside the core member; and
forming an end cap, connectable to a first end of the core member, comprising a first connection part connectable to a casing.

A towed array sonar apparatus is used as an underwater acoustic detection system for the detection of underwater acoustic pressure waves, such as those generated by other vessels or threats for example. Underwater acoustic pressure waves include any in-water pressure waves emanating from any noise-generating source. In general, it is likely that the source is in the water, but sources that are not in direct contact with the water itself may also be detected in some applications. Detectable sources may generate acoustic pressure waves in a frequency band that starts at 0Hz and extends to an upper limit for the application.

A towed array sonar apparatus comprises one or more sensors towed behind a vessel on a cable. Towed arrays are available in different sizes, where different size arrays may be particularly suited for different applications, as will be described below. For example, shorter and thinner towed arrays may be more suitable for use towed behind unmanned underwater vehicles (UUV) or other autonomous vehicles, due to storage constraints on the vehicle for example. On the other hand, longer and larger diameter arrays may be more suitable for low noise applications, such as arrays being towed by an anti-submarine warfare (ASW) frigate or other surface vessels.

In more detail, linear towed arrays comprise a plurality of acoustic sensors spaced apart along the length of the array. The acoustic sensors may be spaced evenly apart, with a spacing D between each sensor, where the "aperture" of the array refers to the distance between the first and the last sensor. Changes to the acoustic sensor spacing D impact the frequency of operation.

Noise in such a system generally originates from all directions. The gain against such noise is indicated by the directivity index. For a linear array with N acoustic sensors, the directivity index is given by:

$$10*\log(2ND/\lambda)$$

Increasing N increases the directivity index, and therefore may improve array performance in low noise applications. For a low noise application, it may be that an array having a large number of acoustic sensors N is therefore more suitable. For a given sensor spacing D, this will result in an increased array length however. A shorter array may be more suitable where there are storage constraints on the vessel, for example, or where the performance is not limited by noise.

Modular arrays comprise multiple sections or modules comprising sensors, which can then be coupled together to provide an array suitable for a specific application. For example, additional modules can be coupled for a low noise application.

Different diameter arrays may also be suited for different applications. For example, thinner towed arrays may be more suitable due to storage constraints on the vessel for example. For example, a thinner towed array may be suitable for use on a vessel with a smaller reel. On the other hand, larger diameter arrays may be more suitable for low noise applications. Movement of water around the sonar system can be a source of noise in the sonar system. Movement through the water creates a turbulent boundary layer around the array. This turbulent flow results in pressure fluctuations which may be detected by the acoustic sensors, resulting in noise. The thinner the array, the closer the turbulent flow layer of water is to the sensors. Thus the smaller the diameter, the more susceptible the array elements are to flow noise. A larger diameter array may therefore be more suitable for a low noise application for example.

Shorter and thinner towed arrays may be suitable for use in applications where storage space is limited and noise does not limit performance, for example for arrays towed behind unmanned underwater vehicles (UUV) or other autonomous vehicles. For example, for slow moving wave gliders, the low vessel speed means that flow noise will generally not be a limitation on the performance of the array. In such cases, a thinner towed array with fewer acoustic sensors may be suitable.

Longer and larger diameter arrays may be more suitable for large aperture low noise applications, such as arrays being towed by an anti-submarine warfare (ASW) frigate or other surface vessel. A frigate or submarine is typically looking for longer range threats, and a low noise floor makes it possible to detect signals that are generated at greater distance. For ASW applications, a larger diameter array having a larger number of acoustic sensors (and therefore increased length) may be more suitable.

This difference in requirements between different applications means that multiple towed sonar systems may need to be used and maintained. This may require different assembly methods, different maintenance schedules and/or different component requirements for example.

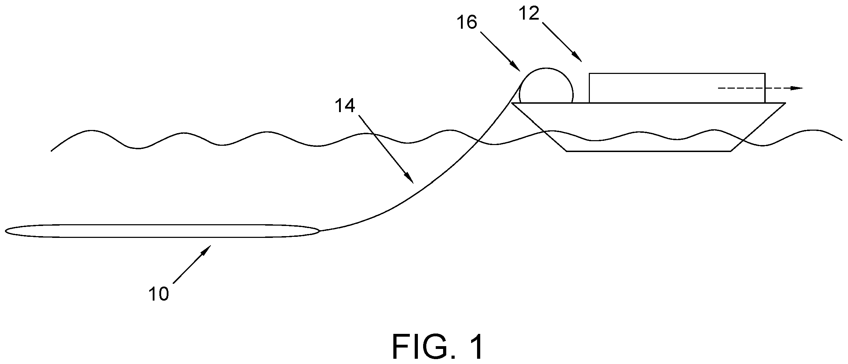

Figure 1 shows a schematic illustration of a towable sonar apparatus 10 in accordance with an embodiment, being towed by a vessel 12. Although in the figure, a surface vessel 12 is shown towing the array 10, it is understood that towable sonar arrays may be used with various types of vessel, including underwater vehicles for example.

The array 10 is attached to vessel 12 via a towing cable 14. The vessel 12 tows the array 10 in the direction of the dashed arrow. The array 10 comprises one or more sensors (not shown). The sensors generate an electrical signal in response to a received acoustic signal. The array 10 may also be referred to as a towed line array, a seismic streamer, a towable sonar apparatus or a linear array.

The cable 14 may be several thousand metres or more in length. This allows the array 10 to be deployed at some distance from the vessel 12, reducing the noise from the vessel 12. Alternatively, for some applications, a significantly shorter cable is used. The cable 14 comprises an electrical conductor so that power can be supplied to the sensors. Signals generated by the sensors in the array 10 may also be coupled to a recording apparatus (not shown) in the vessel 12 through an electrical conductor in the cable 14.

Various known sensors are suitable for use in a towed sonar array 10 of the type described in relation to Figure 1. For example, the array may comprise a plurality of hydrophone sensors, which measure pressure changes associated with a sound wave. A hydrophone may be based on a piezoelectric component, which generates an electric potential when subjected to a pressure change. Various piezoelectric transducers can also generate acoustic signals, and therefore are suitable for use in an active sonar system.

Multiple sensors are arranged spaced apart along the tube 18 forming an array, allowing determination of the direction in which a detected sound wave is traveling to be made. As described above, an upper frequency of operation may be selected for a desired application, and the spacing of the acoustic sensors set according to this upper frequency limit. For example, the sensors are spaced at $\lambda/2$ or less, where A is determined from the upper frequency of operation. This allows processing of the signal in the un-aliased zone. For example, for a desired upper frequency limit of 1 kHz, the sensor spacing is selected as 0.75m.

The array may additionally or alternatively comprise one or more vector sensors. A vector sensor measures the particle motion and pressure changes associated with a sound wave, and thus can also determine the direction in which a sound wave is travelling. The array may additionally or alternatively comprise one or more accelerometers. The array may additionally or alternatively comprise one or more fibre optic sensors. These sensors may be either digital or analogue.

A towing reel 16 is mounted on the vessel 12. The towing cable 14 is coupled to the reel 16, allowing the cable 14 and array 10 to be wound in around the reel 16 when not in use. Various alternative mechanisms of deploying and storing the array 10 may be used however.

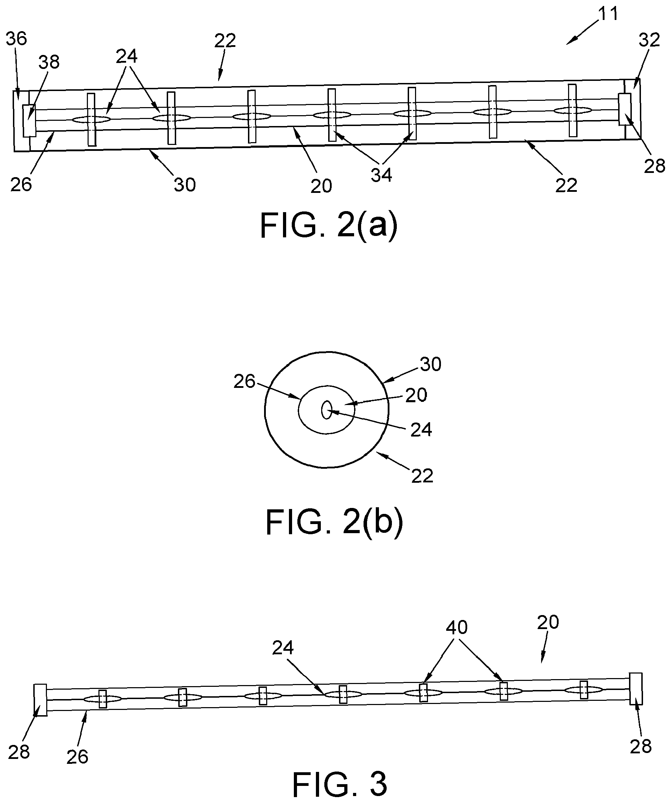

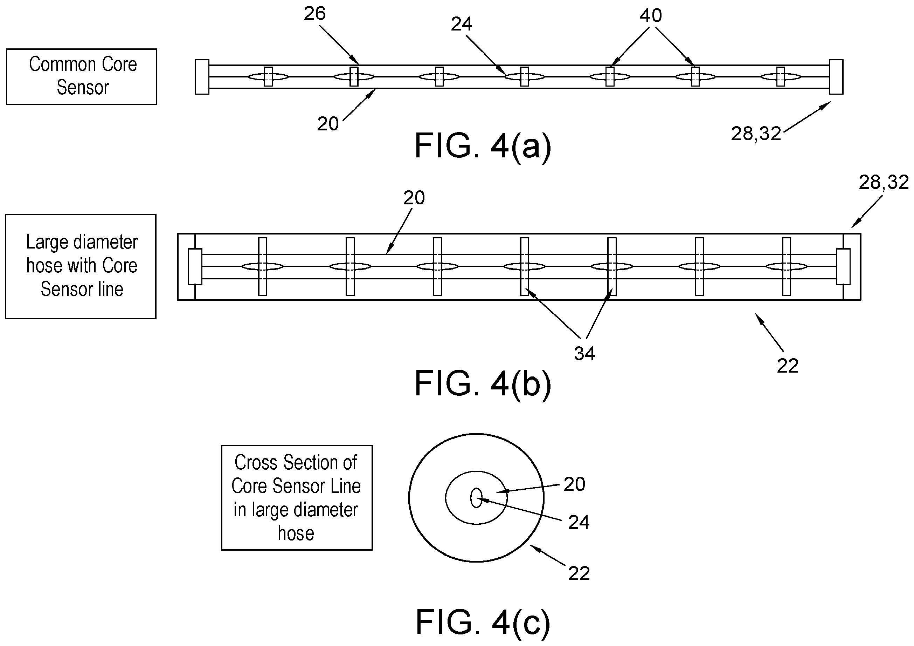

Figure 2 is a schematic illustration of a module 11 for a towable sonar apparatus 10 in accordance with an embodiment, comprising a core component 20 and a casing 22. Figure 2(a) shows a cross-section along the length of the module 11 and Figure 2(b) shows a cross-section through the module 11, i.e. in a plane perpendicular to the length direction, or longitudinal direction. A towed array 10 such as described in relation to Figure 1 may comprise a single module 11 only. Alternatively, a towed array 10 may comprise multiple modules 11 which are coupled together, end to end. The module 11 comprises two distinct components: a core component 20 and a casing 22. The core component 20 is also referred to as a common core 20 or core acquisition line 20. Figure 4(a) shows a schematic illustration of the core component 20 separately from the casing 22, Figure 4(b) shows the module 11 and Figure 4(c) shows a cross-section of the module 11. The module 11 may be for a passive towable sonar apparatus or an active towable sonar apparatus.

The core component 20 comprises a plurality of acoustic sensors 24. The sensors 24 are arranged spaced apart along the core component 20. Any type of sensor that can be used to detect acoustic pressure waves in a fluid may be used, for example hydrophones and/or vector sensors as described previously.

The core component 20 may optionally comprise various additional sensors, for example one or more heading sensors, one or more position sensors, one or more depth sensors and/or any other sensor that is suitable for the desired application. These sensors may be either digital or analogue.

Optionally, the core component 20 may comprise one or more local signal amplifiers and/or one or more signal conditioners corresponding to one or more of the sensors.

The core component 20 comprises a core member 26, which is a first tubular member 26. The first tubular member 26 may be a PolyvinylChloride (PVC) or polyurethane hose. The first tubular member 26 may have an outer diameter of the order of 20mm for example. In an embodiment, the first tubular member 26 has an outer diameter of less than 50mm. The first tubular member 26 has a wall thickness of the order of a few millimetres. In an embodiment, the first tubular member 26 has a wall thickness of less than 10mm. The minimum dimensions of the first tubular member 26 may be selected dependent on one or more of the size of the sensors 24, the size of the electronics and power components located within the first tubular member 26, and the desired strength for the intended application.

The core component 20 may be of the order of 1 metre in length, or of the order of 10 metres in length for example.

The sensors 24 are located inside the first tubular member 26. The first tubular member 26 has a circular cross-section. However, the first tubular member 26 may have a different cross-section, for example an oval cross-section. The first tubular member 26 may be a hollow member. The core component 20 is then filled with a fluid or flexible gel that surrounds the sensors. The fluid may be low-density kerosene for example. The flexible gel material may be a gel produced from polyurethane, for example. The choice of fluid or gel material may be determined by the desired array buoyancy for example. Alternatively, the core component 20 may comprise a solid core member 26 in which the sensors 24 are located, for example a solid polyurethane core member 26 may be used.

The core component 20 comprises a first end cap 28 or first end connector connected to a first end of the first tubular member 26. Various techniques for the attachment of an end cap to a hose of a towed array are known and are also suitable for attachment of the first end cap 28 to the first tubular member 26. The material for the first end cap 28 may be selected based on the desired strength and durability for the intended application. The first end cap 28 may be metallic, for example the first end cap 28 may be steel.

The sensors 24 receive power from the vessel 12, and optionally communicate with a recording apparatus on the vessel 12, via one or more electric cables that run inside the tow cable 14 and connect to the first end cap 28.

The casing 22 is provided around the core component 20. The casing 22 is also referred to as an outer hose 22. In an embodiment, the second tubular member 30 has an outer diameter which is greater than 1.5 times the outer diameter of the first tubular member 26. In an embodiment, the second tubular member 30 has an outer diameter which is greater than twice the outer diameter of the first tubular member 26. In a further embodiment, the second tubular member 30 has an outer diameter which is greater than ten times the outer diameter of the first tubular member 26.

The casing may be filled with fluid, for example low-density kerosene, or with a flexible gel material, for example a gel produced from polyurethane. The choice of fluid or gel material may be determined by the desired array buoyancy for example. The same fluid or gel used to fil the core component 20 may be used to fill the casing 22.

The casing 22 comprises a second tubular member 30. The second tubular member 30 has a circular cross-section. However, the second tubular member 30 may have a different cross-section, for example an oval cross-section. The second tubular member 30 is a hollow cylindrical member in this example.

The second tubular member 30 may have an outer diameter of the order of 200 mm for example. In an embodiment, the second tubular member 30 has an outer diameter of greater than 100mm. The second tubular member 30 has a wall thickness of the order of a few millimetres. In an embodiment, the second tubular member30 has a wall thickness of less than 10mm. The dimensions of the second tubular member 30 may be selected based on the application, for example by the desired reduction in flow noise interference.

In this example, the casing 22 is of the same length as the core component 20, for example, the casing 22 may be of the order of 1 metre in length, or of the order of 10 metres in length for example.

The second tubular member 30 may be a PolyvinylChloride (PVC) or polyurethane hose.

The casing 22 comprises a second end cap 32 or second end connector connected to a first end of the second tubular member 30. Various techniques for the attachment of an end cap to a hose for a towed array are known and are also suitable for attachment of the second end cap 32 to the second tubular member 30. The material for the second end cap 32 may be selected based on the desired strength and durability for the intended application. The second end cap 32 may be metallic, for example the second end cap 32 may be steel.

The second end cap 32 of the casing 22 comprises an external connector connectable to a second casing. In this manner, a second casing (not shown) of a second module may be connected to the first end of the casing 22, allowing the module 11 to be connected as part of a longer array. Thus an array of the desired length may be constructed by connecting two or more modules. For example, the external connector on the second end cap 32 may be connectable to an end cap of a second casing of a second module.

The second end cap 32 of the casing 22 further comprises an internal connector. A first connector of the first end cap 28 of the core component 20 is connected to the internal connector of the second end cap 32 of the casing 22. The internal connector is located in the middle of the second end cap 32 such that the core component 20 sits in a central location along the casing 22. The internal connector of the second end cap 32 is connectable to an end cap of a core component 20.

The core component 20 may be used as a standalone component, and therefore comprises its own standalone end cap, the first end cap 28. However, when the core component 20 is housed in the larger diameter casing 22, a secure electrical and mechanical attachment is made of the first end cap 28 into the larger second end cap 32 of the casing 22.

The casing 22 comprises a fourth end cap 36 connected to a second end of the second tubular member 30. The fourth end cap 36 of the casing 22 comprises an external connector connectable to a third casing. In this manner, a third casing (not shown) of a third module may also be connected to the second end of the casing 22, allowing the module 11 to be connected at both ends as part of a longer array.

The fourth end cap 36 of the casing 22 also comprises an internal connector. A first connector of a third end cap 38 of the core component 20 is connected to the internal connector of the fourth end cap 36 of the casing 22 at the second end. The internal connector is located in the middle of the fourth end cap 36 such that the core component 20 sits in a central location along the casing 22. The internal connector of the fourth end cap 36 is connectable to an end cap of a core component 20.

The casing 22 comprises two end caps 32, 36 that can couple to adjacent modules 11 or to a tow cable. Internally each end cap 32, 36 provides a plugin capability for the common core component 20. The end caps 32, 36 are capable of passing power and optionally data from one module 11 to another or to a tow cable. Thus the internal connector of the second end cap 32 of the casing 22 comprises an electrical connector configured to connect to an electrical connector in the first connector of the first end cap 28 of the core component 20. The external connector of the second end cap 32 of the casing 22 comprises an electrical connector configured to connect to an electrical connector in the external connector of an end cap 32 of another casing 22 or a connector of the tow line.

The sensors 24 receive power, and optionally transmit data, via one or more electric cables that run inside the tow cable and along the one or more core components 20 in the array 10. The electrical cables inside the core component 20 terminate in an electrical connector in the first connector of the first end cap 28 of the core component 20 at the first end of the core component 20. This connects to a corresponding electrical connector on the internal connector of the second end cap 32 of the casing 22 when the core component 20 is fitted inside the casing 22. The electrical connector on the internal connector of the second end cap 32 of the casing 22 is electrically connected to a further electrical connector on the external connector of the second end cap 32 of the casing 22, which can be used to connect to other casings 22 or the tow line for example.

At the second end of the core component 20, the electrical cables inside the core component 20 terminate in an electrical connector in the first connector of the third end cap 38 of the core component 20. This connects to a corresponding electrical connector on the internal connector of the fourth end cap 36 of the casing 22 when the core component 20 is fitted inside the casing 22. The electrical connector on the internal connector of the fourth end cap 36 of the casing 22 connects to a further electrical connector on the external connector of the fourth end cap 36 of the casing 22, which can be used to connect to other casings 22 or the tow line for example.

The end caps are of sufficient strength to enable the longest towed array configurations required for the desired applications.

A towed sonar array may comprise one or multiple modules 11 to form a suitable array length for the desired application. The length of the array is also referred to as the aperture, and corresponds to the distance between the first and the last sensor in the linear array. The array may be tens or hundreds of metres in length for example. An array of hundreds of metres in length may comprise multiple modules 11 of around 10 metres in length for example.

The casing 22 and core component 20 may be designed to avoid or reduce acoustic impedance interfaces in the multiple layers of the module by maintaining the consistency of the acoustic impedance, rC, of all layers. The greater the difference in acoustic impedance between the layers, the greater the reflection and the smaller the transmission of the acoustic waves through the module. Acoustic impedance rC is defined as:

$$rC = \rho v$$

where p is the density of the material and v is the speed of sound through the material. The acoustic impedance rC is the product of density and speed of sound in a material. Where an interface exists, for example between the second tubular member 30 and the water, and the acoustic impedance is different in the adjacent mediums, this is referred to as an impedance mismatch. This acts as a barrier to the transmission of sound. By matching the rC product of the adjacent mediums, this reduces the impedance mismatch and facilitates the transfer of sound across the interface. The material of the tubular member for the core component 20 and the casing 22 are selected to match closely to the rC product of water. Similarly, the fluid or gel which fills the component 20 and the casing 22 is selected to match closely to the rC product of water.

Thus it is desirable for the acoustic impedance of the fluid, gel or solid within the core component 20 to be close to the acoustic impedance of the material of the first tubular member 26. It is also desirable for the acoustic impedance of the material of the first tubular member 26 to be close to the acoustic impedance of the fluid or gel within the casing 22. It is also desirable for the acoustic impedance of the material of the second tubular member 30 to be close to the acoustic impedance of the fluid or gel within the casing 22.

For example, the first tubular member 26 and the second tubular member 30 may be the same material, such that the acoustic impedance is the same. The core component 20 and the casing 22 may be filled with the same fluid or gel, such that the acoustic impedance is the same. The fluid or gel and the material of the first and second tubular members may be selected to have a similar acoustic impedance. The various layers are designed with matching rCs.

As well as consideration of the acoustic impedance of the core component 20 and the casing 22, the buoyancy of the towed array is also a consideration when selecting materials and design for the core component 20 and casing 22. The array 10 is designed to be towed beneath the surface of the water, and the design and materials are selected accordingly. If the towed array 10 is too heavy it will sink, and if it is too light it will float to the surface. Buoyancy spacers may be included in the core component 20 and/or in the casing 22 in order to achieve the desired buoyancy.

The casing 22 is a casing for a towable sonar apparatus. The casing 22 is a larger diameter housing system that the core component 20 can be inserted into depending on the application. The core component 20 can be used in many applications, for example the core component 20 can be inserted into different casings 22 having different diameters depending on the application. The choice of casing 22 hose diameter may be selected depending on the required application. For example large aperture low noise applications, such as those being towed by an ASW frigate may use a larger diameter casing 22. For shorter range systems such as torpedo defence arrays a smaller diameter casing 22 may be used, or the core component 20 may be used without the casing 22.

The core component 20 is housed in the larger diameter hose, or casing 22. The casing 22 or larger diameter hose is a standalone component that is designed to house a common core component 20. The core component 20 may be housed in the larger diameter casing 22 when used for low noise applications. Additional modules 11 may also be connected to increase the array length when used for low noise applications.

The casing 22 further comprises a series of bulkheads 34. The casing 22 utilises a series of bulkheads 34 to provide protection for the common core component 20, including its sensors, amplifiers and any other components. One or more bulkheads 34 are located such that when the core component 20 is located in the casing 22, each of the bulkheads 34 lines up with the location of a sensor 24. As least part of the sensor 24 is therefore provided within the bulkhead 34, which provides protection for the sensor 24. The bulkheads 34 may also provide protection against collapse during reeling and protection against depth effects for example. The bulkheads 34 are provided along the length of the module 11. The core component 20 is located inside the bulkheads 34 when located in the casing 22. The bulkheads 34 may be in the form of a ring, where the outer edge of the ring supports the second tubular member 30, and the core component 20 is located within the ring. The bulkheads 34 are not integral with the second tubular member 30, but rather they are separate components which are inserted separately into the second tubular member 30, around the core component 20.

The second tubular member 30 of the casing 22 is a hose made of a material having an acoustic impedance matching that of water. For example, the second tubular member 30 may be PVC or polyurethane.

Optionally, the casing 22 comprises at least one strength member (not shown), disposed along a longitudinal axis of the casing 22. The strength member may be provided along the outside of, inside of or within the second tubular member 30. The strength member helps to maintain the overall length of the module 11 to within a pre-defined tolerance. The strength member may be a rod like member. The strength member may be affixed between the second end cap 32 and the fourth end cap 36. The end caps of the casing 22 anchor the strength members, i.e. the strength members are attached to the end caps 32, 36.

Figure 3 is a schematic illustration of a core component 20 for a towable sonar apparatus in accordance with an embodiment. The core component 20 comprises a core member, which is a first tubular member 26.

The core component 20 comprises a first end cap 28 connected to a first end of the first tubular member 26, wherein the first end cap 28 comprises a first connector connectable to an end cap of a casing 22. The first end cap 28 is also connectable to a second core component, for example through a second connector or through the first connector. In this manner, a second core component (not shown) may be connected to the first end of the core component 20, allowing the core component 20 to be connected as part of a longer array. Thus an array of the desired length may be constructed by connecting two or more core components 20.

The core component 20 further comprises a third end cap 38 connected to a second end of the first tubular member 26, wherein the third end cap 38 also comprises a first connector connectable to an end cap of a casing 22. The third end cap 38 is also connectable to a second core component. In this manner, a third core component (not shown) may also be connected to the second end of the core component 20, allowing the core component 20 to be connected at both ends as part of a longer array.

The core component 20 comprises two end caps 28, 38 that can couple to adjacent core components 20 and/or to a tow cable. The end caps 28, 38 also provide a plugin capability to plug into a casing 22. The end caps 28, 38 are capable of passing power and optionally data from one module 11 to another or to a tow cable. Thus the first connector of the first end cap 28 of the core component 20 comprises an electrical connector configured to connect to an electrical connector in the internal connector of the second end cap 32 of the casing 22. The first end cap 28 of the core component 20 further comprises an electrical connector configured to connect to an electrical connector in an end cap 38 of another core component 20 or a connector of the tow line.

The electrical cables inside the core component 20 also terminate in an electrical connector in the first end cap 28 of the core component 20 at the first end of the core component 20. This connects to a corresponding electrical connector on an end cap of a second core component 20 when the core component 20 is connected to a second core component 20 or to the tow line when the core component 20 is connected to the tow line. The end connectors of the core component 20 are designed to allow for mechanical connection to an end connector of another core component 20 and also to an end connector of a casing 22 for connection when housed in a larger diameter casing 22. Similarly, the larger diameter casing 22 end connecter is designed to accommodate and connect to an end connector of a core component 20.

At the second end of the core component 20, the electrical cables inside the core component 20 also terminate in an electrical connector in the third end cap 38 of the core component 20. This connects to a corresponding electrical connector on an end cap of a third core component 20 when the core component 20 is connected to a third core component 20 or to the tow line when the core component 20 is connected to the tow line.

The end caps are of sufficient strength to enable the longest towed array configurations required for the desired applications.

The core component 20 comprises electronics and sensing devices including power and transmission components. The core component 20 comprises one or more hydrophones, vector sensors or transducers. The core component 20 may comprise additional sensors, including position and/or heading sensors for example. The core component 20 may comprise vector sensors, acoustic pressure sensing devices, position and heading sensors for example.

The core component 20 is modular and connectable. The maximum length of the core component 20 is a length suitable for the desired application having the smallest towed array length. In this way, it is possible for the core component 20 to be used for this application. The core component 20 can be used as a stand-alone towed array. This core component 20 may itself be a stand-alone and operable towed array. A towed array may comprise multiple core components 20 connected to give a desired length.

The core component 20 has sensor spacing, data acquisition elements (for example additional sensors such as position sensors) and suitable space, weight and power (SWAP) that can address a range of applications and host vessels from wavegliders to UUVs and unmanned surface vessels (USV) to full size military naval applications such as frigates, corvettes and submarines. For example, low power may be of greater importance for small vessels such as wave gliders and battery powered vehicles. A core component 20 that can address a range of applications may therefore be provided. The spacing and type of sensors in the core component 20 are such that the core component 20 may be used for a range of applications. As has been described above, the sensor spacing is selected dependent on the desired upper frequency of operation for the intended application.

The core component 20 is a standalone module. It can be used as a towed array system. A towed array system may comprise one or more core components 20 connected together in a single line. Each core component comprises all of the components needed to form a towed array for a naval application for example. A complete towed sonar array may comprise one or multiple core components 20 to form a suitable array length for the desired application. Shorter and thinner towed arrays may be suitable for use in applications where storage space is limited and noise does not limit performance, for example for arrays towed behind unmanned underwater vehicles (UUV) or other autonomous vehicles. For example, for slow moving wave gliders, the low vessel speed means that flow noise will generally not be a consideration or limitation on the performance of the array.

In such cases, a thinner towed array with fewer acoustic sensors may be suitable, and therefore one or more core components 20 may be used without the larger diameter casing 22.

The housing material or first tubular member 26 is a material having an acoustic impedance matching that of water. For example, the second tubular member 30 may be PVC or polyurethane..

The core component 20 further comprises cables and connectors allowing the supply of power to the sensors 24 and any other components such as amplifiers for example. The core component 20 incorporates cables for supplying power to the sensors 24. A power supply is located on the towing vessel. A cable runs through the towing line and connects to an electrical connector in the end cap of the core component 20. A cable runs through the core component 20 and is connected to the electrical connector in the end cap. The cable supplies power to the sensors 24 within the core component 20 when the core component 20 is connected to the towing line and therefore to the power supply on the vessel. Where multiple core components 20 are connected together, the cable through each core component 20 supplies power to the subsequent component through the end cap connectors.

The core component 20 further comprises a means of transmitting data back to a receiver on the vessel. This may be via a second cable system along the core component 20 to the towing line or via some other means, for example wireless transmission. The core component 20 may further comprise means of receiving data, for example receiving sensor control data from the vessel. Again, this may be via a second cable system or via a wireless receiver for example.

The core component 20 may optionally further comprise one or more hose support components. For example, the core component 20 may comprise a series of bulkheads 40 to protect the sensors 24 and any other components, for example amplifiers. The bulkheads 40 are also referred to as sensor protectors 40. The bulkheads may also provide protection against collapse if the towed array is reeled and protection against depth effects. The bulkheads 40 are provided along the length of the core component 20. The sensors 24 are located inside the bulkheads 40. The bulkheads 40 may be in the form of a ring, where the outer edge of the ring supports the first tubular member 26, and the sensor 24 is located inside the ring. The bulkheads 34 are not integral with the first tubular member 26, but rather they are separate components which are inserted separately into the first tubular member 26 when the core component 20 is manufactured.

Optionally, the core component 20 comprises at least one strength member (not shown), disposed along a longitudinal axis of the core component 20. The strength member may be provided along the outside of, inside of or within the first tubular member 26. The strength member helps to maintain the overall length of the core component 20 to within a pre-defined tolerance. This also helps to maintain spacing of the sensors 24 and length of module 11 to within a pre-defined tolerance. The strength member may be a rod like member. The strength member may be affixed between the first end cap 28 and the third end cap 38. The end caps of the core component 20 anchor the strength members, i.e. the strength members are attached to the end caps of the core component 20.

In the above described arrangement, the core component 20 connects into the casing 22 when used in an application for which a larger diameter hose is suitable (for example a low noise application) and connects to another core component 20 when used in an application for which a smaller diameter hose is suitable. Alternatively however, the core component 20 connects to another core component 20 within the casing 22. For example, a single casing 22 may house two or more core components 20. In such an arrangement, the casing 22 will have a larger length than each of the core components 20. For example, a single casing 22 may house all of the core components 20 forming the towed array. Several core components 20 each having a length of the order of 10 metres may be housed inside a single casing 22 having a length of the order of hundreds of metres for example.

Although in the above examples, the core member of the core component 20 is a hollow tubular member 26, where the tubular member 26 is filled with fluid or gel for example, in other embodiments the core member is a solid member, for example a solid cylindrical member, in which the sensors and other components are embedded. In this case, the housing material, i.e. core member material is a solid material. For example, the housing material is acoustic impedance matched with water. For example, the housing material may be polyurethane.

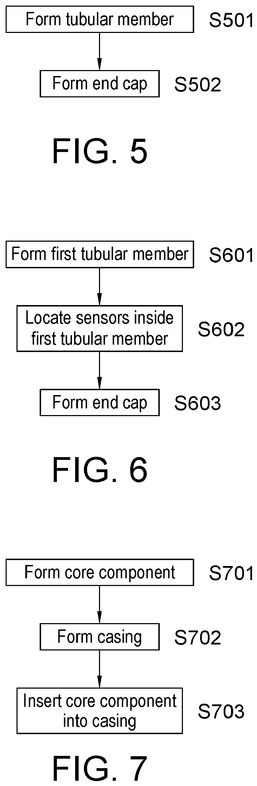

Figure 5 shows a method of manufacturing a casing 22 for a towable sonar array 10 in accordance with an embodiment.

S501 comprising forming a second tubular member 30. As has been described above, the second tubular member 30 may be formed as a PVC or polyurethane hose.

S502 comprises forming a second end cap 32 connectable to a first end of the second tubular member 30, wherein the second end cap 32 comprises an external connection part connectable to another casing and an internal connection part connectable to a core component 20. S502 further comprises forming a fourth end cap 36 connectable to a second end of the second tubular member 30, wherein the second end cap 32 comprises an external connection part connectable to another casing and an internal connection part connectable to a core component 20. The second end cap 32 may be detachably connected to the second tubular member 30 to allow the second end cap 32 to be removed from the second tubular member 30 to allow insertion of the core component 20, and re-attached once the core component 20 is inserted.

Figure 6 shows a method of manufacturing a core component for a towable sonar array according to an embodiment.

S601 comprises forming a first tubular member 26. As has been described above, the first tubular member 26 may be formed as a PVC or polyurethane hose.

S602 comprises locating the sensors 24 inside the first tubular member 26. Various known methods used in the manufacture of towed arrays may be suitable for inserting and assembling the sensors 24 and any additional components such as electronics and other sensors into the first tubular member 26.

S603 comprises forming a first end cap 28, connectable to a first end of the first tubular member 26, comprising a first connection part connectable to a casing 22. S603 further comprises forming a third end cap 38, connectable to a second end of the first tubular member 26, comprising a first connection part connectable to a casing 22. The first tubular member 26 comprising the sensors may be assembled and filled with fluid or gel, and the end caps fitted using various known techniques for assembling towed sonar arrays.

Figure 7 shows a method of manufacturing a module for a towable sonar apparatus in accordance with an embodiment. The method provides a build strategy for the core component 20 and the insertion into the larger diameter hose or casing 22.

S701 comprises forming a core component 20 comprising at least one sensor 24 and a first end cap 28 comprising a first connection part. A method as described in Figure 6 above may be used in this step.

S702 comprises forming a casing 22 comprising a second tubular member 30 and a second end cap 32 comprising a second connection part detachably connectable to the first connection part of the core component 20.

S703 comprises inserting the core component 20 into the casing 22 such that the second tubular member 30 is provided around the core component 20 and such that the second connection part of the casing 22 is detachably connected to the first connection part of the core component 20. The casing 22 may be assembled filled with fluid or gel, and the end caps of the casing 22 fitted and connected to the end caps of the core component 20.

The core component 20 and casing 22 may be manufactured in a towed array production facility. The core component 20 may be produced with a common build approach that, subject to achieving the required tolerances and quality, could be undertaken by a range of suppliers. The fluid filling of the core component 20 and casing 22 may be performed separately, for example in a specialist facility for completion of the towed array module.

The core component 20 may be combined with different casings 22, having different diameters, depending on the application. This allows the core component 20 to be used for different applications requiring different diameters, for example vessels with different storage capacities or applications with different noise requirements. This means that a single core component 20 construction may be used, providing increased commonality of components, power and/or data interfaces to address multiple requirements for example. This may provide reduced cost of development and/or through life maintenance for example. Further, it may also enable spares to be carried at sea and facilitate the opportunity for at-sea repairs or replacement to be undertaken without returning to port.

The core component 20 and casing 22 may provide commonality across a range of capabilities, thereby reducing cost of manufacture and/or through life support for example. The core component 20 and casing 22 also provide the possibility of easy repurposing. For example, large military vessels may carry and deploy autonomous vessels, some of which may be required to deploy a short thin towed array for local detection or communication purposes, while at the same time the vessel itself deploys a low noise towed array for long range passive detection. The core components 20 can be used to form the short thin towed array, whilst the same core components 20 together with the casings 22 can be used to form the low noise towed array. This means that two separate arrays are not required.

The core component 20 and casing 22 may provide a towed array across a range of capabilities and platforms for example. This may provide a lower cost of manufacture through scale, lower cost maintenance through commonality of parts and facilities, better and more consistent maintenance schedules, improved usability and/or flexible options for applications and sizes for example.

Different towed array configurations may be suitable for different applications and situations, meaning that towed arrays of different lengths and diameters may be used. Furthermore, the different arrays may have different connectors, data rates, and/or power consumption requirements. This incompatibility between systems may result in different assembly methods, different maintenance schedules and/or different component requirements. Variations in the arrays used may also impact data consistency, by use of different array sensor spacing, different digitisation systems and/or different data transmission systems. This also reduces compatibility between vessel systems, whether they are from other towed arrays, hull mounted sonars or other on-board processing systems for example. Multiple types and sizes of individually designed towed arrays may be used.

In particular, towed arrays are used for numerous applications, and ranging from very short thin towed arrays to very long large diameter arrays. In many cases, a specific application has an individual towed array solution. Different types of components and construction techniques create multiple incompatibilities between arrays such as frequency of operation, spacing of hydrophones, data formats, maximum data transmission capability, maximum power supply requirement and/or capability (due to differing approaches and uses of non-acoustic sensors such as position and heading sensors). Each solution is may be costly to develop and prove, with time at sea being very costly and limited.

A core component 20 such as described above can be simply adapted for a wide range of applications. This also means common inboard components such as power supplies, connectors, inboard data acquisition and/or standardised data processing methods may be used.

The above described casings 22 and core components 20 can be used to simply construct an towable sonar array with a range of diameters and lengths for different applications. The towable sonar array comprises a common core component 20 comprising electronics and sensing devices including power and transmission components, hydrophones, vector sensors, acoustic pressure sensing devices, position and/or heading sensors for example.

The core components 20 can be combined to provide shorter and thinner towed arrays for use behind UUVs or autonomous vehicles for example. The casings 22 and core components 20 can be combined to provide longer and larger diameter arrays towed behind submarines and surface vessels for example. Each application has differing performance requirements and purposes. This may provide improvements in long term support, ship installation, flexibility, adaptability and/or maintaining full availability for example.

The core component 20 can be used alone as a thin line array or inserted into a larger diameter casing 22. This means that various standalone applications could be addressed by this one system whilst being transferable to other applications as required. This may provide enhanced flexibility, maintainability, and/or availability whilst reducing the overall cost of ownership for example. The reuse of a standardised single standalone core component into multiple applications is provided. The system enables a single capability to be utilised for a range of multiple applications thus increasing availability and/or standardising towed array digital power requirements and digital structures for example.

The core component 20 is a common building block that could be used as a standalone thinner towed array and when required housed in the larger diameter casing 22 to enable its use in a range of applications. A common core component 20 that is not on its own a towed array, but simply a common sub component could also be provided and used at build housed in any diameter casing 22 suitable for the intended application.

The core component 20 may be used to form a thinner line towed array. The core component 20 forms a common towed array or sensor line. By providing the core component 20 inside the casing 22, towed array flow noise may be reduced for example.

In the above description, a method of manufacturing a core component 20 and a casing 22 is described.

One or both of these elements, or various component parts of the elements described herein may additionally or alternatively be formed using an additive manufacturing process.

Suitable additive manufacturing techniques in accordance with the present disclosure include, for example, Fused Deposition Modeling (FDM), Sterolithography (SLA), or Digital Light Processing (DLP), and other known processes. The additive manufacturing processes described herein may be used for forming elements using any suitable material. For example, the material may be a polymer, a mixture of polymer and some other material (for example an anti-biofouling agent) or any other suitable material that may be in solid, liquid, powder or any other suitable form or combinations thereof. These materials are examples of materials suitable for use in additive manufacturing processes which may be suitable for the fabrication of example elements described herein. The examples described herein may be formed from any suitable mixtures of materials. For example, a component may include multiple layers, segments, or parts that are formed using different materials, processes, and/or on different additive manufacturing machines. In this manner, components may be constructed which have different materials and material properties for meeting the demands of any particular application. In addition, it should be appreciated that in alternate embodiments, all or a portion of these components may be formed via machining, and/or any other suitable manufacturing process. Indeed, any suitable combination of materials and manufacturing methods may be used to form the components described herein.

Examples described herein not only include products or components as described herein, but also methods of manufacturing such products or components via additive manufacturing and computer software, firmware or hardware for controlling the manufacture of such products via additive manufacturing.

Additive manufacturing processes may fabricate components based on three-dimensional (3D) information, for example a three-dimensional computer model (or design file), of the component. The structure of one or more parts of the product may be represented digitally in the form of a design file. A design file, or computer aided design (CAD) file, is a configuration file that encodes one or more of the surface or volumetric configuration of the shape of a product. That is, a design file represents the geometrical arrangement or shape of the product. Design files can take any now known or later developed file format. For example, design files may be in the Stereolithography or "Standard Tessellation Language" (.stl) format which was created for stereolithography CAD programs of 3D Systems, or the Additive Manufacturing File (.amf) format, which is an American Society of Mechanical Engineers (ASME) standard that is an extensible markup-language (XML) based format designed to allow any CAD software to describe the shape and composition of any three-dimensional object to be fabricated on any additive manufacturing printer. Further examples of design file formats include AutoCAD (.dwg) files, Blender (.blend) files, Parasolid (.x_t) files, 3D Manufacturing Format (.3mf) files, Autodesk (3ds) files, Collada (.dae) files and Wavefront (.obj) files, although many other file formats exist. Design files can be produced using modelling (e.g. CAD modelling) software and/or through scanning the surface of tubular mesh member 28 to measure the surface configuration of the mesh member 28.

Once obtained, a design file may be converted into a set of computer executable instructions that, once executed by a processer, cause the processor to control an additive manufacturing apparatus to produce a product according to the geometrical arrangement specified in the design file. The conversion may convert the design file into slices or layers that are to be formed sequentially by the additive manufacturing apparatus. The instructions (otherwise known as geometric code or "G-code") may be calibrated to the specific additive manufacturing apparatus and may specify the precise location and amount of material that is to be formed at each stage in the manufacturing process. As discussed above, the formation may be through deposition or through any other suitable form of additive manufacturing method.

The code or instructions may be translated between different formats, converted into a set of data signals and transmitted, received as a set of data signals and converted to code, stored, etc., as necessary. The instructions may be an input to the additive manufacturing system and may come from a part designer, an intellectual property (IP) provider, a design company, the operator or owner of the additive manufacturing system, or from other sources. An additive manufacturing system may execute the instructions to fabricate the product using any of the technologies or methods disclosed herein.

Design files or computer executable instructions may be stored in a (transitory or non-transitory) computer readable storage medium (e.g., memory, storage system, etc.) storing code, or computer readable instructions, representative of the product to be produced. As noted, the code or computer readable instructions defining the product that can be used to physically generate the object, upon execution of the code or instructions by an additive manufacturing system. For example, the instructions may include a precisely defined 3D model of the product and can be generated from any of a large variety of well-known computer aided design (CAD) software systems such as AutoCADO, TurboCAD®, DesignCAD 3D Max, etc. Alternatively, a model or prototype of the component may be scanned to determine the three-dimensional information of the component.

Accordingly, by controlling an additive manufacturing apparatus according to the computer executable instructions, the additive manufacturing apparatus can be instructed to print out one or more parts of the product. These can be printed either in assembled or unassembled form. For instance, different sections of the product may be printed separately (as a kit of unassembled parts) and then subsequently assembled. Alternatively, the different parts may be printed in assembled form.

In light of the above, embodiments include methods of manufacture via additive manufacturing. This includes the steps of obtaining a design file representing the product and instructing an additive manufacturing apparatus to manufacture the product in assembled or unassembled form according to the design file. The additive manufacturing apparatus may include a processor that is configured to automatically convert the design file into computer executable instructions for controlling the manufacture of the product. In these embodiments, the design file itself can automatically cause the production of the product once input into the additive manufacturing device. Accordingly, in this embodiment, the design file itself may be considered computer executable instructions that cause the additive manufacturing apparatus to manufacture the product. Alternatively, the design file may be converted into instructions by an external computing system, with the resulting computer executable instructions being provided to the additive manufacturing device.

Given the above, the design and manufacture of implementations of the subject matter and the operations described in this specification can be realized using digital electronic circuitry, or in computer software, firmware, or hardware, including the structures disclosed in this specification and their structural equivalents, or in combinations of one or more of them. For instance, hardware may include processors, microprocessors, electronic circuitry, electronic components, integrated circuits, etc. Implementations of the subject matter described in this specification can be realized using one or more computer programs, i.e., one or more modules of computer program instructions, encoded on computer storage medium for execution by, or to control the operation of, data processing apparatus. Alternatively or in addition, the program instructions can be encoded on an artificially-generated propagated signal, e.g., a machine-generated electrical, optical, or electromagnetic signal that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

Although additive manufacturing technology is described herein as enabling fabrication of complex objects by building objects point-by-point, layer-by-layer, typically in a vertical direction, other methods of fabrication are possible and within the scope of the present subject matter. For example, although the discussion herein refers to the addition of material to form successive layers, one skilled in the art will appreciate that the methods and structures disclosed herein may be practiced with any additive manufacturing technique or other manufacturing technology.

Further embodiments are set out in the following clauses:

1. A module for a towable sonar apparatus, comprising:

a core component, comprising at least one sensor and a first connection part;
a casing, comprising:

a tubular member provided around the core component;
a second connection part detachably connected to the first connection part of the core component.

2. The module according to clause 1, wherein the tubular member has an outer diameter at least 1.5 times the outer diameter of the core component.

3. The module according to clause 1 or 2, wherein the tubular member is a second tubular member and wherein the core component further comprises a first tubular member, wherein the at least one sensor is located within the first tubular member.

4. The module according to clause 3, wherein the core component further comprises a first end cap being at a first end of the first tubular member and comprising the first connection part, and wherein the casing further comprises a second end cap at a first end of the second tubular member, the second connection part being an internal connection part of the second end cap, the second end cap further comprising an external connection part connectable to another module.

5. The module according to clause 4, wherein the core component further comprises:

a third end cap at a second end of the first tubular member; and
a longitudinal strength member connected between the first end cap and the third end cap.

6. A casing for a towable sonar apparatus, comprising:

a tubular member;

an end cap at a first end of the tubular member, wherein the end cap comprises an external connection part connectable to another casing and an internal connection part connectable to a core component.

7. The casing according to clause 6, wherein the tubular member has a wall thickness of less than 10mm.

8. The casing according to clause 6 or 7, wherein the internal connection part provides an electrical and mechanical connection to the core component.

9. The casing according to clause 6, 7 or 8, wherein the external connection part provides an electrical and mechanical connection to another casing.

10. A core component for a towable sonar apparatus, comprising:

at least one sensor;
a core member, wherein the at least one sensor is located inside the core member; and
an end cap at a first end of the core member, wherein the end cap comprises a first connection part connectable to a casing.

11. The core component according to clause 10, wherein the end cap is further configured to connect to another core component.

12. A towable sonar apparatus, comprising the module according to any of clauses 1 to 5.

13. A vessel comprising the towable sonar apparatus of clause 12.

14. A kit-of-parts comprising:

a core component for a towable sonar apparatus, comprising:

at least one sensor; and
a first connection part; and

a casing for a towable sonar apparatus, comprising:

a tubular member configured to be provided around the core component; and
a second connection part detachably connectable to the first connection part of the core component.

15. A kit-of-parts comprising:

a tubular member;

an end cap connectable to a first end of the tubular member, wherein the end cap comprises an external connection part connectable to another casing and an internal connection part connectable to a core component.

16. A computer program comprising computer executable instructions that, when executed by a processor, cause the processor to control an additive manufacturing apparatus to manufacture the module of any of clauses 1 to 5, the casing of any of clauses 6 to 9, the core component of clause 10 or 11 or the kit of parts according to clause 14 or 15.

17. A method of manufacturing a device via additive manufacturing, the method comprising:

obtaining an electronic file representing a geometry of a product wherein the product is the module of any of clauses 1 to 5, the casing of any of clauses 6 to 9, the core component of clause 10 or 11 or the kit of parts according to clause 14 or 15; and
controlling an additive manufacturing apparatus to manufacture, over one or more additive manufacturing steps, the product according to the geometry specified in the electronic file.

18. A method of manufacturing a module for a towable sonar array, the method comprising:

forming a core component comprising at least one sensor and a first connection part;

forming a casing comprising a tubular member and a second connection part detachably connectable to the first connection part of the core component; and
inserting the core component into the casing such that the tubular member is provided around the core component and such that the second connection part of the casing is detachably connected to the first connection part of the core component.

19. A method of manufacturing a casing for a towable sonar array, the method comprising:

forming a tubular member;
forming an end cap connectable to a first end of the tubular member, wherein the end cap comprises an external connection part connectable to another casing and an internal connection part connectable to a core component.

20. A method of manufacturing a core component for a towable sonar array, the method comprising:

forming a core member, wherein at least one sensor is located inside the core member; and forming an end cap, connectable to a first end of the core member, comprising a first connection part connectable to a casing.

While certain embodiments have been described, these embodiments have been presented by way of example only, and are not intended to limit the scope of the inventions. Indeed the novel methods and apparatus described herein may be embodied in a variety of other forms; furthermore, various omissions, substitutions and changes in the form of methods and apparatus described herein may be made.

**Claims**

1. A module for a towable sonar apparatus, comprising:

   a core component, comprising at least one sensor and a first connection part;
   a casing, comprising:

   a tubular member provided around the core component;
   a second connection part detachably connected to the first connection part of the core component.

2. The module according to claim 1, wherein the tubular member has an outer diameter at least 1.5 times the outer diameter of the core component.

3. The module according to claim 1 or 2, wherein the tubular member is a second tubular member and wherein the core component further comprises a first tubular member, wherein the at least one sensor is located within the first tubular member, wherein optionally the core component further comprises a first end cap being at a first end of the first tubular member and comprising the first connection part, and wherein the casing further comprises a second end cap at a first end of the second tubular member, the second connection part being an internal connection part of the second end cap, the second end cap further comprising an external connection part connectable to another module, and wherein optionally the core component further comprises:

   a third end cap at a second end of the first tubular member; and
   a longitudinal strength member connected between the first end cap and the third end cap.

4. A casing for a towable sonar apparatus, comprising:

   a tubular member;

   an end cap at a first end of the tubular member, wherein the end cap comprises an external connection part connectable to another casing and an internal connection part connectable to a core component.

5. The casing according to claim 4, wherein the internal connection part provides an electrical and mechanical connection to the core component and/or wherein the external connection part provides an electrical and mechanical connection to another casing.

6. A core component for a towable sonar apparatus, comprising:

   at least one sensor;
   a core member, wherein the at least one sensor is located inside the core member; and
   an end cap at a first end of the core member, wherein the end cap comprises a first connection part connectable to a casing.

7. A towable sonar apparatus, comprising the module according to any of claims 1 to 3.

8. A vessel comprising the towable sonar apparatus of claim 7.

9. A kit-of-parts comprising:

   a core component for a towable sonar apparatus, comprising:

   at least one sensor; and
   a first connection part; and

   a casing for a towable sonar apparatus, comprising:

   a tubular member configured to be provided around the core component; and
   a second connection part detachably connectable to the first connection part of the core component.

10. A kit-of-parts comprising:

    a tubular member;
    an end cap connectable to a first end of the tubular member, wherein the end cap comprises an external connection part connectable to another casing and an internal connection part connectable to a core component.

11. A computer program comprising computer executable instructions that, when executed by a processor, cause the processor to control an additive manufacturing apparatus to manufacture the module of any of claims 1 to 3, the casing of claim 4 or 5, the core component of claim 6 or the kit of parts according to claim 9 or 10.

12. A method of manufacturing a device via additive manufacturing, the method comprising:

obtaining an electronic file representing a geometry of a product wherein the product is the module of any of claims 1 to 3, the casing of claim 4 or 5, the core component of claim 6 or the kit of parts according to claim 9 or 10; and
controlling an additive manufacturing apparatus to manufacture, over one or more additive manufacturing steps, the product according to the geometry specified in the electronic file.

13. A method of manufacturing a module for a towable sonar array, the method comprising:

forming a core component comprising at least one sensor and a first connection part;
forming a casing comprising a tubular member and a second connection part detachably connectable to the first connection part of the core component; and
inserting the core component into the casing such that the tubular member is provided around the core component and such that the second connection part of the casing is detachably connected to the first connection part of the core component.

14. A method of manufacturing a casing for a towable sonar array, the method comprising:

forming a tubular member;
forming an end cap connectable to a first end of the tubular member, wherein the end cap comprises an external connection part connectable to another casing and an internal connection part connectable to a core component.

15. A method of manufacturing a core component for a towable sonar array, the method comprising:

forming a core member, wherein at least one sensor is located inside the core member; and
forming an end cap, connectable to a first end of the core member, comprising a first connection part connectable to a casing.

FIG. 1

FIG. 2(a)

FIG. 2(b)

FIG. 3

Common Core Sensor

FIG. 4(a)

Large diameter hose with Core Sensor line

FIG. 4(b)

Cross Section of Core Sensor Line in large diameter hose

FIG. 4(c)

EP 4 141 863 A1

Form tubular member    S501

Form end cap    S502

# FIG. 5

Form first tubular member    S601

Locate sensors inside first tubular member    S602

Form end cap    S603

# FIG. 6

Form core component    S701

Form casing    S702

Insert core component into casing    S703

# FIG. 7

Europäisches
Patentamt

European
Patent Office

Office européen
des brevets

## EUROPEAN SEARCH REPORT

Application Number

EP 22 19 1297

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 1 522 904 A (FRANCE ARMED FORCES) 31 August 1978 (1978-08-31) * page 1, line 9 - line 13; figures 2,3,3a * * page 4, line 9 - line 128 * | 1-15 | INV. G10K11/00 G01S7/521 ADD. G01V1/20 |
| X | US 2008/074946 A1 (HILLESUND OYVIND [US] ET AL) 27 March 2008 (2008-03-27) * paragraphs [0024], [0027], [0033] - [0034], [0037]; figures 1,2,3 * | 1-15 | |
| X | KR 101 146 561 B1 (AGENCY DEFENSE DEV [KR]) 25 May 2012 (2012-05-25) * paragraphs [0002], [0035] - [0049], [0080]; figures 1,2,3,4,5,11,1517 * | 1-15 | |
| A | SCHINAULT MATTHEW E ET AL: "Investigation and Design of a Towable Hydrophone Array for General Ocean Sensing", OCEANS 2019 - MARSEILLE, IEEE, 17 June 2019 (2019-06-17), pages 1-5, XP033628387, DOI: 10.1109/OCEANSE.2019.8867239 * abstract * | 11,12 | TECHNICAL FIELDS SEARCHED (IPC) B06B G01V G10K G01S H04R |

The present search report has been drawn up for all claims

| Place of search | Date of completion of the search | Examiner |
|---|---|---|
| The Hague | 4 January 2023 | Haenssler, Thedda |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 19 1297

This annex lists the patent family members relating to the patent documents cited in the above-mentioned European search report.
The members are as contained in the European Patent Office EDP file on
The European Patent Office is in no way liable for these particulars which are merely given for the purpose of information.

04-01-2023

| Patent document cited in search report | | Publication date | Patent family member(s) | | Publication date |
|---|---|---|---|---|---|
| GB 1522904 | A | 31-08-1978 | DE | 2607672 A1 | 09-09-1976 |
| | | | FR | 2302655 A1 | 24-09-1976 |
| | | | GB | 1522904 A | 31-08-1978 |
| | | | US | 4100527 A | 11-07-1978 |
| US 2008074946 | A1 | 27-03-2008 | AU | 2007211959 A1 | 10-04-2008 |
| | | | GB | 2442096 A | 26-03-2008 |
| | | | NO | 340581 B1 | 15-05-2017 |
| | | | US | 2008074946 A1 | 27-03-2008 |
| KR 101146561 | B1 | 25-05-2012 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2112159 A